# EUROPÄISCHE PATENTSCHRIFT

(11) **EP 3 091 255 B1**
(45) Veröffentlichungstag und Bekanntmachung des Hinweises auf die Patenterteilung: **06.11.2019**
(21) Anmeldenummer: 15166794.6
(22) Anmeldetag: 07.05.2015
(51) Int. Cl.: F16H 57/08

(54) **PLANETENGETRIEBE**
PLANETARY GEAR UNIT
TRAIN ÉPICYCLOÏDAL

(43) Veröffentlichungstag der Anmeldung: 09.11.2016
(73) Patentinhaber: Flender GmbH, 46395 Bocholt (DE)
(72) Erfinder: Dinter, Ralf Martin, 45888 Gelsenkirchen (DE)
(74) Vertreter: Maier, Daniel Oliver

(56) Entgegenhaltungen:
- EP-A1- 2 383 480
- WO-A1-2014/117197
- GB-A- 2 514 167
- JP-A- S58 166 122

## Beschreibung

Die vorliegende Erfindung betrifft ein Planetengetriebe, insbesondere für eine Windkraftanlage, mit einem Getriebegehäuse, einem zentralen Sonnenrad, das in dem Getriebegehäuse um eine zentrale Getriebedrehachse rotierbar gehalten ist und eine Außenverzahnung trägt, einem Hohlrad, das konzentrisch zu der zentralen Getriebedrehachse in dem Getriebegehäuse angeordnet ist und eine Innenverzahnung aufweist, einem Planetenträger, der in dem Getriebegehäuse um die zentrale Getriebedrehachse drehbar gelagert ist, und mehreren Planetenrädern, die mittels als Gleitlager ausgestalteter Planetenradlager an dem Planetenträger um Planetenraddrehachsen drehbar gelagert sind und Außenverzahnungen aufweisen, die mit der Innenverzahnung des Hohlrads und der Außenverzahnung des Sonnenrads in Eingriff stehen.

Derartige Planetengetriebe sind im Stand der Technik in unterschiedlichsten Ausgestaltungen bekannt und dienen beispielsweise als Übersetzungsgetriebe der Übersetzung einer niedrigen Drehzahl einer Antriebswelle des Planetengetriebes in eine deutlich höhere Drehzahl einer Abtriebswelle des Planetengetriebes. Dementsprechend sind Planetengetriebe häufig in Windkraftanlagen verbaut, wo eine niedrige Drehzahl der Rotorwelle in eine deutlich höhere Drehzahl der Generatorwelle übersetzt werden muss. Bei der Verwendung in Windkraftanlagen werden Planetengetriebe aufgrund der variablen Windverhältnisse überwiegend unter stark wechselnden Betriebsbedingungen betrieben. Infolge zeitweilig äußerst niedriger Drehzahlen der Antriebswelle und gleichzeitig extrem hoher Krafteinwirkung auf die Lager werden in Planetengetrieben für Windkraftanlagen weit überwiegend Wälzlager zur Lagerung der Planetenräder verbaut.

Alternativ dazu können Planetenradlager in Planetengetrieben für Windkraftanlagen aber auch als Gleitlager ausgebildet sein. Ein derartiges Planetengetriebe für eine Windkraftanlage ist beispielsweise in der EP 2 383 480 A1 beschrieben und umfasst ein Getriebegehäuse, in dem ein zentrales Sonnenrad mit einer Außenverzahnung um eine zentrale Getriebedrehachse drehbar gehalten ist. Weiterhin ist in dem Getriebegehäuse konzentrisch zu der zentralen Getriebedrehachse ein Hohlrad mit einer Innenverzahnung vorgesehen. Ebenfalls in dem Getriebegehäuse ist ein Planetenträger um die zentrale Getriebedrehachse drehbar gelagert. An dem Planetenträger sind mehrere Planetenräder gehalten. Die Planetenräder weisen Außenverzahnungen auf, die mit der Innenverzahnung des Hohlrads und der Außenverzahnung des Sonnenrads in Eingriff stehen.

Die Planetenräder sind an als Radialgleitlager ausgestalteten Planetenradlagern um Planetenraddrehachsen drehbar gelagert. Für einen zuverlässigen Betrieb eines Radialgleitlagers muss dessen Lagerspiel auch berücksichtigen, dass während des Betriebs des Radialgleitlagers temperatur- und/oder belastungsbedingte Ausdehnungen und/oder Verformungen auftreten können. Daher müssen die Bauteile des Radialgleitlagers und/oder die Laufflächen der gelagerten Planetenräder mit hoher Präzision, also geringen Fertigungstoleranzen hergestellt werden und/oder bei der Montage nachbearbeitet werden, was mit hohen Kosten einhergeht.

Während des Betriebs des Radialgleitlagers verändert sich das Lagerspiel infolge von Verschleiß allmählich, was zu einer Fehlfunktion oder einem Ausfall des Radialgleitlagers führen kann. Daher ist eine regelmäßige Wartung und ggf. ein Austausch des Radialgleitlagers erforderlich, wenn das Lagerspiel des Radialgleitlagers einen zulässigen Bereich zu verlassen droht. Dies geht insbesondere bei der Verwendung in Windkraftanlagen mit entsprechenden Stillstandzeiten einher.

Radialgleitlager können ausschließlich radiale Kräfte ableiten. Um die Planetenräder auch axial zu führen und axiale Bewegungen der Planetenräder zu verhindern, sind ergänzend Axialgleitlager erforderlich, die auf die Planetenräder wirkende axiale Kräfte ableiten. Solche Axialgleitlager können beispielsweise im Kontaktbereich zwischen Wangen des Planetenträgers und Stirnseiten der Planetenräder ausgebildet sein und erhöhen ebenfalls die Kosten derartiger Planetenradlager. Ein weiteres Beispiel für ein Planetengetriebe einer Windkraftanlage, in welchem die Planetenräder durch angestellte Radialgleitlager gelagert sind, zeigt das Dokument WO2014/117197 A1.

Ausgehend von diesem Stand der Technik ist es daher eine Aufgabe der vorliegenden Erfindung, ein Planetengetriebe zu schaffen, das es ermöglicht, das Lagerspiel der eingesetzten Gleitlager leicht einzustellen und einen einfachen Aufbau besitzt.

Die erfindungsgemäße Aufgabe wird durch ein Planetengetriebe nach Anspruch 1 gelöst.

Der Erfindung liegt somit die Überlegung zugrunde, axial geteilte Doppelkegel-Gleitlager einzusetzen, die in der Lage sind, sowohl axiale als auch radiale Kräfte abzuleiten. Durch die entgegengesetzte Anordnung der beiden kegelförmigen Gleitflächen, welche derart ausgebildet sind, dass die verjüngten Enden zueinander weisen, kann ein Planetenrad sowohl in axialer als auch in radialer Richtung festgelegt werden. Dabei kann durch axiale Verstellung der kegelförmigen Lagerkörper relativ zu dem Planetenrad, das korrespondierende kegelförmige Laufflächen besitzt, das radiale Lagerspiel in einfacher Weise eingestellt werden. Die Drehfestigkeit der Lagerkörper kann beispielsweise dadurch bewirkt werden, dass mit Übermaß hergestellte Lagerkörper nach ihrer Positionierung auf die Planetenradachse geschrumpft werden.

Bei einer vorteilhaften Ausgestaltung ist wenigstens ein Lagerkörper in axialer Richtung verstellbar, um zwischen den Gleitflächen des Planetenradlagers und den korrespondierenden Laufflächen des gelagerten Planetenrads einen Schmierspalt definierter Höhe einzustellen. Eine optimale Höhe des Schmierspalts zwischen den Gleitflächen des Planetenradlagers und den korrespondierenden Laufflächen des gelagerten Planetenrads ist eine wesentliche Voraussetzung für einen zuverlässigen Betrieb des Planetengetriebes.

Bevorzugt ist ein Lagerkörper verstellbar, während der andere Lagerkörper eine axialfeste Position aufweist. Der Lagerkörper mit axialfester Position kann als Referenz für das Verstellen des verstellbaren Lagerkörpers dienen, was einer einfachen und präzisen Einstellung der optimalen Höhe des Schmierspalts des Planetenradlagers zuträglich ist.

In einer Ausgestaltung des erfindungsgemäßen Planetengetriebes kann die axiale Position des axialfesten Lagerkörpers durch einen Axialanschlag definiert sein. Als Axialanschlag kann insbesondere eine Wange des Planetenträgers oder eine an der Planetenradachse ausgebildete radiale Ringschulter dienen.

Vorteilhaft sind dem verstellbaren Lagerkörper zum axialen Verstellen Justiermittel zugeordnet. Derartige Justiermittel erleichtern das Einstellen und insbesondere auch das bequeme Nachstellen eines erfindungsgemäßen Planetengetriebes im Rahmen einer Wartung, wenn sich die Höhe des Schmierspalts des Gleitlagers durch Verschleiß verändert hat.

In einer Variante des erfindungsgemäßen Planetengetriebes sind Distanzelemente als Justiermittel vorgesehen, die zwischen einem Lagerkörper und einer benachbarten Wange des Planetenträgers und/oder zwischen den Lagerkörpern angeordnet sind. Durch die Wahl einer geeigneten Anzahl von Distanzelementen und deren Anordnung an den angegebenen axialen Positionen innerhalb des Gleitlagers lässt sich eine Höhe des Schmierspalts des Gleitlagers einstellen, wobei Fertigungsungenauigkeiten der Lagerkomponenten ausgeglichen werden können.

In einer weiteren Variante ist der verstellbare Lagerkörper auf die Planetenradachse aufgeschraubt. Dazu sind an dem verstellbaren Lagerkörper ein Innengewinde und an der Planetenradachse ein korrespondierendes Außengewinde ausgebildet. Mit einer derartigen Schraubverbindung lässt sich die axiale Position des verstellbaren Lagerkörpers durch Drehen um die Planentenradachse stufenlos einstellen.

Alternativ kann der verstellbare Lagerkörper in eine benachbarte Wange des Planetenträgers eingeschraubt sein. Dazu sind an dem verstellbaren Lagerkörper ein Außengewinde und in einer benachbarten Wange des Planetenträgers ein korrespondierendes Innengewinde ausgebildet. Mit einer derartigen Schraubverbindung lässt sich die axiale Position des verstellbaren Lagerkörpers durch Verschrauben in einer benachbarten Wange eines Planetenträgers stufenlos einstellen.

Dabei kann eine Verdrehsicherung vorgesehen sein, mittels welches der auf dem Planetenträger oder in die Wange eingeschraubte Lagerkörper festlegbar ist. Eine Verdrehsicherung erlaubt die sichere Fixierung der eingestellten axialen Position des verstellbaren Lagerkörpers.

Erfindungsgemäß ist auch eine Kombination mehrerer unterschiedlicher Justiermittel zum Einstellen der optimalen Höhe des Schmierspalts des Planetenradlagers möglich.

In Weiterbildung des erfindungsgemäßen Planetengetriebes ist in jeder Gleitfläche wenigstens eine Schmiertasche ausgebildet ist, in die ein Schmierstoffkanal mündet, der den Lagerkörper radial durchsetzt, wobei der Schmierstoffkanal mit einem exzentrischen Schmierstoffzuführkanal verbunden ist, der in der Planetenradachse ausgebildet ist und diese axial durchsetzt. Während des normalen Betriebs des Planetengetriebes wird den Gleitflächen des Planetenradlagers im Rahmen einer Druckschmierung Schmierstoff zugeführt. Der Schmierstoff wird unter Druck in den exzentrischen Schmierstoffzuführkanal eingeleitet und strömt von dort durch Schmierstoffkanäle in die Schmiertaschen, von wo er sich auf den Gleitflächen verteilt.

In einer weiteren Ausgestaltung ist zwischen den Lagerkörpern ein Distanzring angeordnet, der die Planetenradachse umgreift und einen minimalen axialen Abstand zwischen den Lagerkörpern definiert. Durch einen solchen Distanzring kann verhindert werden, dass der axiale Abstand und damit die Höhe des Schmierspalts zu gering eingestellt werden, was einem möglichst verschleißarmen Lauf des Planetenrads entgegensteht.

Bei einem erfindungsgemäßen Planetengetriebe kann an einer inneren Umfangsfläche des Distanzrings eine ringförmige Schmierstoffsammel-Nut ausgebildet sein. Diese Schmierstoffsammel-Nut kann zum Verteilen von Schmierstoff zwischen den Lagerkörpern verwendet werden.

In Weiterbildung der vorliegenden Erfindung ist in dem Distanzring eine Mehrzahl von Schmierstoffkanälen ausgebildet, die in die Schmierstoffsammel-Nut münden. Durch diese Schmierstoffkanäle kann Schmierstoff aus der Schmierstoffsammel-Nut in Richtung des Schmierspalts fließen.

Vorteilhaft ist in der Planetenradachse ein Schmierstoffzuführkanal ausgebildet, der radial in die Schmierstoffsammel-Nut des Distanzrings mündet. Durch einen solchen Schmierstoffzuführkanal lässt sich der in dem Distanzring vorgesehenen Schmierstoffsammel-Nut in Form einer Trudelschmierung Schmierstoff zuführen. Die Trudelschmierung ermöglicht es, das Planetengetriebe in einem Notbetrieb weiter zu betreiben, wenn die Druckschmierung ausfällt.

Weitere Merkmale und Vorteile der vorliegenden Erfindung werden anhand der nachfolgenden Beschreibung verschiedener Ausführungsformen des erfindungsgemäßen Planetengetriebes unter Bezugnahme auf die beiliegende Zeichnung deutlich. Darin sind
- FIG 1: eine schematische axiale Querschnittsansicht eines Planetengetriebes gemäß einer ersten Ausführungsform der vorliegenden Erfindung;
- FIG 2: eine axiale Draufsicht eines Planetenträgers des in Figur 1 dargestellten Planetengetriebes entlang der Linie II-II;
- FIG 3: eine perspektivische Seitenansicht eines Lagerkörpers des in Figur 1 dargestellten Planetengetriebes;
- FIG 4: eine axiale Querschnittsansicht eines Planetenradlagers des in Figur 1 dargestellten Planetengetriebes;
- FIG 5: das in Figur 4 gezeigte Planetenradlager mit bezeichneten Abmessungen;
- FIG 6: eine axiale Querschnittsansicht eines Planetenradlagers eines Planetengetriebes gemäß einer zweiten Ausführungsform der vorliegenden Erfindung;
- FIG 7: eine axiale Querschnittsansicht eines Planetenradlagers eines Planetengetriebes gemäß einer dritten Ausführungsform der vorliegenden Erfindung; und
- FIG 8: eine axiale Querschnittsansicht eines Planetenradlagers eines Planetengetriebes gemäß einer vierten Ausführungsform der vorliegenden Erfindung.

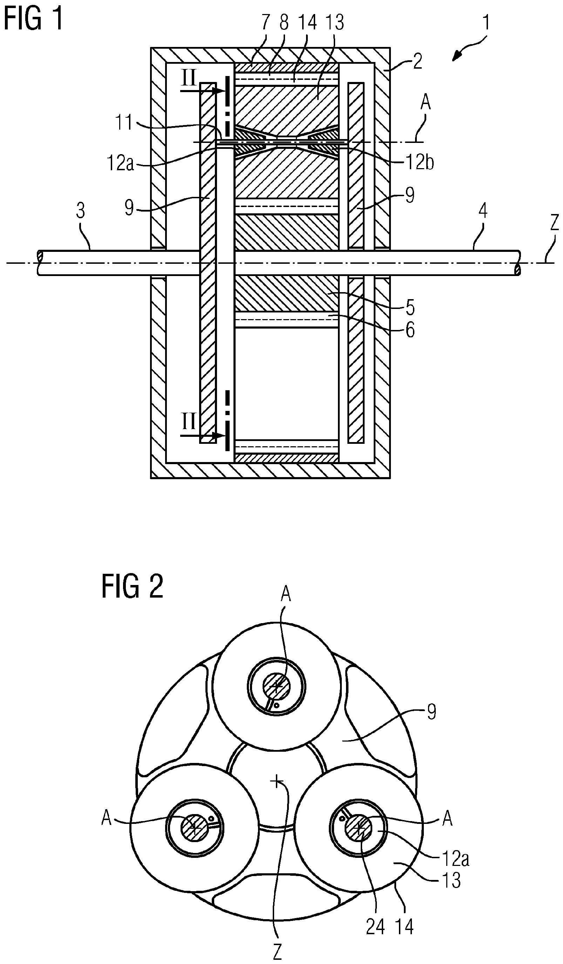

Die Figuren 1 bis 5 zeigen ein Planetengetriebe 1 gemäß einer ersten Ausführungsform der vorliegenden Erfindung. Das Planetengetriebe 1 umfasst ein Getriebegehäuse 2, das auf gegenüberliegenden Stirnseiten jeweils von einer Antriebswelle 3 und einer Abtriebswelle 4 durchsetzt ist. In dem Getriebegehäuse 2 ist ein zentrales Sonnenrad 5 mit einer Außenverzahnung 6 an der Abtriebswelle 4 um eine zentrale Getriebedrehachse Z rotierbar gehalten. In axialer Richtung korrespondierend zum Sonnenrad 5 ist in dem Getriebegehäuse 2 ein zu der zentralen Getriebedrehachse Z konzentrisches Hohlrad 7 mit einer Innenverzahnung 8 angeordnet, das fest mit dem Getriebegehäuse 2 verbunden ist und das Sonnenrad 5 umgibt. An der Antriebswelle 3 ist in dem Getriebegehäuse 2 ein Planetenträger 9 um die zentrale Getriebedrehachse Z drehbar gehalten.

Der Planetenträger 9 umfasst Wangen 10, zwischen denen drei Planetenradachsen 11 angeordnet sind, von denen in der Figur 1 ist zur Verbesserung der Übersichtlichkeit lediglich eine Planetenradachse dargestellt ist. Der Planetenträger 9 kann auch eine von drei abweichende Zahl von Planetenradachsen tragen. An jeder Planetenradachse 11 ist ein als Gleitlager ausgebildetes Planetenradlager 12 vorgesehen, in dem ein Planetenrad 13 um eine Planetenraddrehachse A drehbar gelagert ist. Die Planetenräder 13 weisen Außenverzahnungen 14 auf, die mit der Innenverzahnung 8 des Hohlrads 7 und der Außenverzahnung 6 des Sonnenrads 5 in Eingriff stehen.

Jedes Planetenradlager 12 umfasst erfindungsgemäß zwei ringförmige Lagerkörper 12a, 12b, die von der Planetenradachse 11 durchsetzt und an dieser drehfest gehalten sind. An den äußeren Umfangsflächen der Lagerkörper 12a, 12b sind kegelmantelförmige Gleitflächen 16 ausgebildet, die mit der zentralen Getriebedrehachse Z jeweils einen spitzen Winkel a, der bevorzugt zwischen 5° und 40° beträgt, aufspannen. In axialen Randbereichen der Gleitflächen 16 können Abschrägungen oder dergleichen vorgesehen sein, um einer verschleißbedingten Kantenbildung entgegenzuwirken.

Jeder Lagerkörper 12a, 12b ist von einem Schmierstoffkanal 17 radial durchsetzt. Der Schmierstoffkanal 17 ist mit einem exzentrischen Schmierstoffzuführkanal 18 verbunden, der die Planetenradachse 11 axial durchsetzt. Der Schmierstoffkanal 17 mündet in eine Schmiertasche 19, die in einem gering belasteten Bereich der Gleitfläche 16 des Lagerkörpers 12a, 12b als Abflachung oder Ausnehmung ausgebildet ist. Durch den Schmierstoffzuführkanal 18, den Schmierstoffkanal 17 und die Schmiertasche 19 werden die Gleitflächen 16 während des regelmäßigen Betriebs des Planetenradlagers 12 in Form einer Druckschmierung mit Schmierstoff versorgt.

Die verjüngten Enden der Lagerkörper 12a, 12b weisen zueinander, wobei an inneren Umfangsflächen des Planetenrads 13 zu den Gleitflächen 16 des Planetenradlagers 12 korrespondierende Laufflächen 20 ausgebildet sind.

Zwischen den Lagerkörpern 12a, 12b des Planetenradlagers 12 ist ein Distanzring 21 angeordnet, der die Planetenradachse 11 umgreift und einen minimalen Abstand zwischen den Lagerkörpern 12a, 12b definiert. An einer inneren Umfangsfläche des Distanzrings 21 ist eine ringförmige Schmierstoffsammel-Nut 22 ausgebildet, in die eine Mehrzahl den Distanzring durchsetzender Schmierstoffkanäle 23 mündet. Korrespondierend zu der Schmierstoffsammel-Nut 22 des Distanzrings 21 ist in der Planetenradachse 11 ein zentraler Schmierstoffzuführkanal 24 ausgebildet, der in die Schmierstoffsammel-Nut 22 des Distanzrings 21 mündet. Durch den zentralen Schmierstoffzuführkanal 24, die Schmierstoffsammel-Nut 22 und die Mehrzahl von Schmierstoffkanälen 23 kann eine Trudelschmierung des Planetenradlagers 12 erfolgen, die für einen Notbetrieb des Planetengetriebes ausreicht.

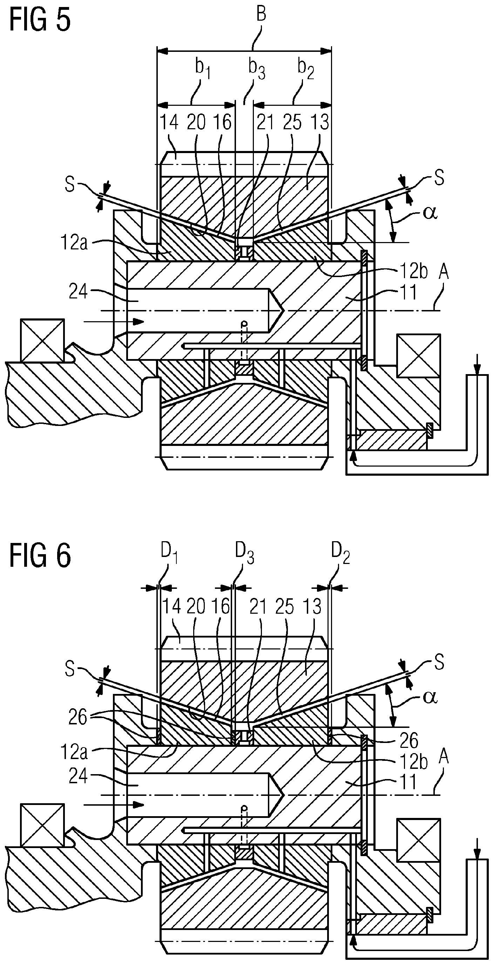

Die Figur 5 zeigt das Planetenradlager 12 des Planetengetriebes 1 gemäß der ersten Ausführungsform der vorliegenden Erfindung mit bezeichneten Abmessungen. Die axialen Breiten b₁ und b₂ der Lagerkörper 12a, 12b und b₃ des Distanzrings 21 erfüllen die Beziehung b₁ + b₂ + b₃ = B, wobei B die Breite des Planetenradlagers 12 zwischen gegenüberliegenden Wangen 10 des Planententrägers 9 bezeichnet. Auf diese Weise sind die Lagerkörper 12a, 12b und der Distanzring 21 zwischen den Wangen 10 des Planetenträgers 9 axial festgelegt.

Nach der Herstellung erfüllen die Lagerkörper 12a, 12b und der Distanzring 21 zunächst die Beziehung b₁ + b₂ + b₃ > B. Bei der Montage des Planetenradlagers 12 werden die Breiten der beiden Lagerkörper 12a, 12b und/oder der Distanzring 21 durch spanende Nachbearbeitung derart angepasst, dass sowohl die Beziehung b₁ + b₂ + b₃ = B erfüllt als auch durch geeignete Wahl der Breiten b₁, b₂ und b₃ eine geforderte Höhe S des Schmierspalts 25 eingestellt ist. Dabei besteht zwischen einer Höhenänderung ΔS des Schmierspalts 25 und einer durch Breitenänderung Δb bewirkten axialen Verstellung des jeweiligen Lagerkörpers 12a, 12b die Beziehung ΔS = Δb * sin(α).

Die Figur 6 zeigt ein Planetenradlager 12 eines Planetengetriebes 1 gemäß einer zweiten Ausführungsform der vorliegenden Erfindung. Zwischen einem Lagerkörper 12a und dem Distanzring 21 sowie zwischen den Lagerkörpern 12a, 12b und jeweils benachbarten Wangen 10 des Planetenträgers 9 sind Distanzelemente 26 eingefügt. Die axialen Breiten b₁, b₂ und b₃ der Lagerkörper 12a, 12b und des Distanzrings 21 einerseits sowie D₁, D₂ und D₃ der Distanzelemente 26 andererseits erfüllen die Beziehung b₁ + b₂ + b₃ + D₁ + D₂ + D₃ = B, so dass die Lagerkörper 12a, 12b, der Distanzring 26 und die Distanzelemente 26 axial zwischen gegenüberliegenden Wangen 10 des Planetenträgers 9 festgelegt sind.

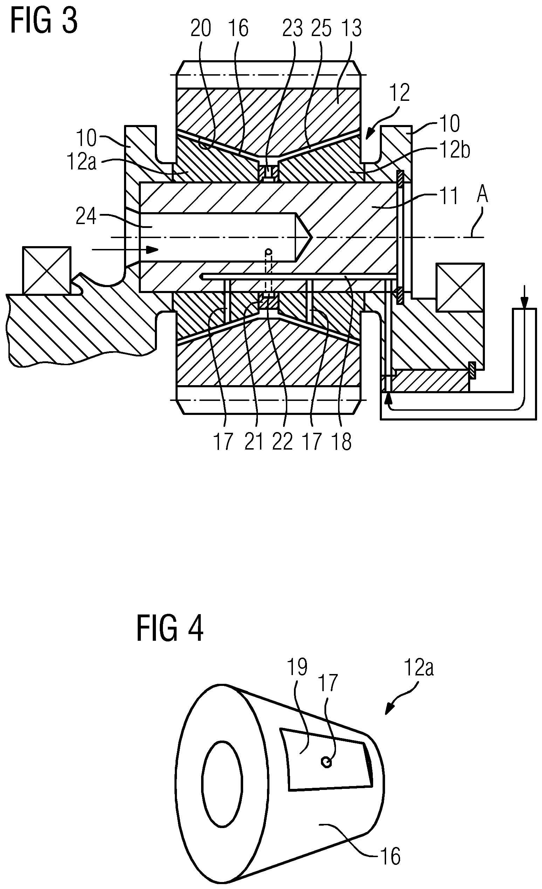

Nach der Herstellung erfüllen die Lagerkörper 12a, 12b und der Distanzring 21 zunächst die Beziehung b₁ + b₂ + b₃ < B. um die gewünschte Höhe S des Schmierspalts 25 einzustellen. Dabei sind b₁, b₂, b₃ und B wie in der in Figur 4 dargestellten Ausführungsform definiert und D₁, D₂ und D₃ bezeichnen die axialen Breiten der Distanzelemente 26.

Zunächst erfüllen die axialen Breiten der Lagerkörper 12a, 12b und des Distanzrings 21 die Beziehung b₁ + b₂ + b₃ < B. Bei der Montage werden an den genannten Stellen Distanzelemente 26 geeigneter Dicken D₁, D₂ und D₃ derart eingefügt, dass die summierte axiale Dicke D₁ + D₂ + D₃ aller eingefügten Distanzelemente 26 gleich der Differenz zwischen der Lagerbreite B und der summierten axialen Breite b_{1 +} b₂ + b₃ der Lagerkörper 12a, 12b und des Distanzrings 21 ist und der Schmierspalt S die geforderte Höhe S besitzt.

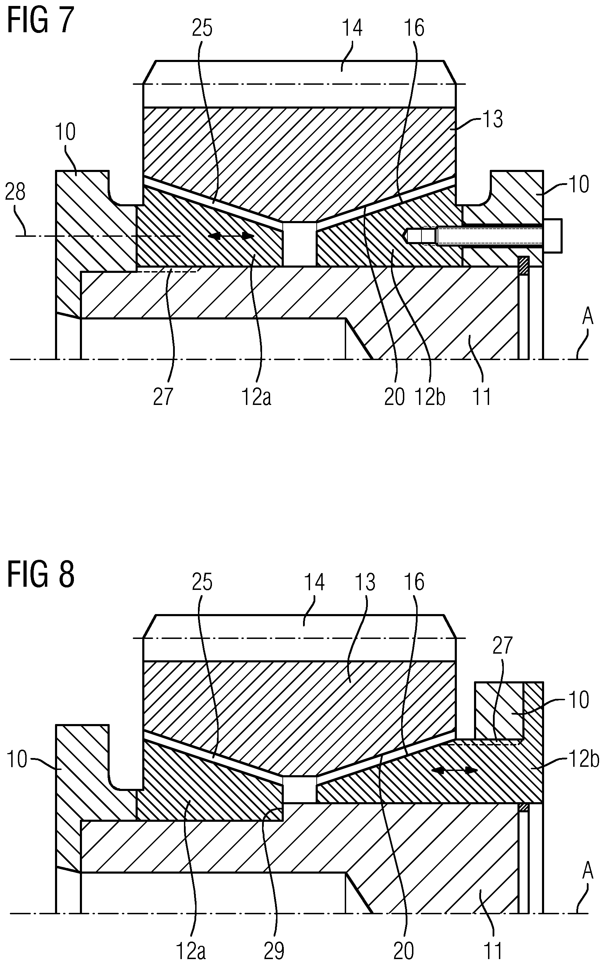

Die Figur 7 zeigt ein Planetenradlager 12 eines Planetengetriebes 1 gemäß einer dritten Ausführungsform der vorliegenden Erfindung. Der verstellbare Lagerkörper 12a ist auf die Planetenradachse 11 aufgeschraubt. Dazu sind an dem verstellbaren Lagerkörper 12a ein Innengewinde und an der Planetenradachse 11 ein korrespondierendes Außengewinde ausgebildet. Diese Schraubverbindung 27 erlaubt ein stufenloses Verstellen der axialen Position des verstellbaren Lagerkörpers 12a auf der Planetenradachse 11. Der axialfeste Lagerkörper 12b ist mit der benachbarten Wange 10 des Planetenträgers 9 verschraubt, wodurch die als Axialanschlag wirkende Wange 10 des Planetenträgers 9 die axiale Position des axialfesten Lagerkörpers 12b definiert. Wenn die geforderte Höhe S des Schmierspalts 25 erreicht ist, wird der Lagerkörper 12a durch eine Verdrehsicherung 28 in der entsprechenden axialen Position festgelegt. Als Verdrehsicherung 28 können Stifte, Bolzen oder dergleichen verwendet werden. Wenn sich die Höhe S des Schmierspalts 25 im Laufe der Zeit aufgrund eines betriebsbedingten Verschleißes ändert, lässt sich der verstellbare Lagerkörper 12a entsprechend nachjustieren, um die geforderte Höhe S des Schmierspalts 25 wiederherzustellen.

Die Figur 8 zeigt ein Planetenradlager 12 eines Planetengetriebes 1 gemäß einer vierten Ausführungsform der vorliegenden Erfindung. Der verstellbare Lagerkörper 12b ist in eine benachbarte Wange 10 des Planetenträgers 9 eingeschraubt. Dazu sind an dem verstellbaren Lagerkörper 12b ein Außengewinde und in der Wange 10 ein Innengewinde ausgebildet. Diese Schraubverbindung 27 ermöglicht es, den Lagerkörper 12b in axialer Richtung mehr oder weniger in die Wange 10 des Planetenträgers 9 einzuschrauben und mit einer Verdrehsicherung 28 in einer beliebigen axialen Position festzulegen. Als Verdrehsicherung 28 können auch hier Stifte, Bolzen oder dergleichen verwendet werden. Die axiale Position des axialfesten Lagerkörpers 12a ist durch eine an der Planetenradachse 11 ausgebildete, als Axialanschlag dienende radiale Ringschulter 29 festgelegt. Durch Ein- bzw. Ausschrauben des verstellbaren Lagerkörpers 12b lässt sich die geforderte Höhe S des Schmierspalts 25 einstellen. Wenn sich die Höhe S des Schmierspalts 25 des Planetenradlagers 12 in Folge betriebsbedingten Verschleißes verschoben hat, lässt sich das Planetenradlager 12 durch axiales Verstellen des Lagerkörpers 12b entsprechend nachjustieren.

Für eine größere Flexibilität beim Justieren von Planetenradlagern 12 erfindungsgemäßer Planetengetriebe 1 lassen sich die in den Figuren 5 bis 8 vorgeschlagenen Verfahrensweisen zum Einstellen einer optimalen Höhe des Schmierspalts 25 des Planetenradlagers 12 miteinander kombinieren.

Während des Betriebs des Planetengetriebes 1 wird der Planetenträger 9 durch die Antriebswelle 3 in Rotation versetzt. Wegen des Eingriffs ihrer Außenverzahnung 14 in die Innenverzahnung 8 des Hohlrads 7 rollen die Planetenräder 13 entlang der Innenseite des Hohlrads 7 ab. Durch die Rotation der Planentenräder 13 wird wegen des Eingriffs ihrer Außenverzahnung 14 in die Außenverzahnung 6 des Sonnenrads 5 wiederum das Sonnenrad 5 und mit ihm die Abtriebswelle 4 in Rotation versetzt. Dabei dreht sich die Abtriebswelle 4 mit höherer Drehzahl als die Antriebswelle 3, weil die Planetenräder 13 einen geringeren Umfang haben als der Kreis, den die Planetenraddrehachsen A bei Ihrer Rotation um die zentrale Getriebedrehachse Z des Planetengetriebes 1 beschreiben.

Während des Betriebs des Gleitlagers wird diesem kontinuierlich Schmierstoff durch den zentralen Schmierstoffzuführkanal 24 zugeführt. Der Schmierstoff verteilt sich zunächst in der Schmierstoffsammel-Nut 22 des Distanzrings 21 und fließt dann durch den wenigstens einen Schmierstoffkanal 23 in Richtung des Schmierspalts 25.

Ein wesentlicher Vorteil des erfindungsgemäßen Planetengetriebes 1 liegt darin, dass im Unterschied zu zylindrischen Gleitlagern keine zusätzlichen Axialgleitlager vorgesehen werden müssen, um das Planetenrad 13 in axialer Richtung festzulegen. Dies macht entsprechend die ausbildende Bearbeitung zusätzlicher axialer Gleitflächen überflüssig. Ein weiterer Vorteil des erfindungsgemäßen Gleitlagers liegt in der einfachen Ein- bzw. Nachstellbarkeit der Höhe S des Schmierspalts 25, was eine größere Bauteiltoleranz bei der Herstellung der für das Planetenradlager benötigten Bauteile erlaubt. Insgesamt lassen sich also bei der Verwendung eines erfindungsgemäßen Planetengetriebes Kostenvorteile aus geringeren Herstellungskosten und einer aufgrund der Nachstellmöglichkeiten erhöhten Lebensdauer der Planetenradlager 12 erzielen.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung, wie sie durch die angehängten Ansprüche definiert wird, zu verlassen.

## Patentansprüche

1. Planetengetriebe (1), insbesondere für eine Windkraftanlage, mit einem Getriebegehäuse (2), einem zentralen Sonnenrad (5), das in dem Getriebegehäuse (2) um eine zentrale Getriebedrehachse (Z) rotierbar gehalten ist und eine Außenverzahnung (6) trägt, einem Hohlrad (7), das konzentrisch zu der zentralen Getriebedrehachse (Z) in dem Getriebegehäuse (2) angeordnet ist und eine Innenverzahnung (8) aufweist, einem Planetenträger (9), der in dem Getriebegehäuse (2) um die zentrale Getriebedrehachse (Z) drehbar gelagert ist, und mehreren Planetenrädern (13), die mittels als Gleitlager ausgestalteter Planetenradlager (12) an dem Planetenträger (9) um Planetenraddrehachsen (A) drehbar gelagert sind und Außenverzahnungen (14) aufweisen, die mit der Innenverzahnung (8) des Hohlrads (7) und der Außenverzahnung (6) des Sonnenrads (5) in Eingriff stehen,
**dadurch gekennzeichnet, dass** jedes Planetenradlager (12) zwei ringförmige Lagerkörper (12a, 12b) umfasst, die von einer Planetenradachse (11) durchsetzt und an dieser drehfest gehalten sind, wobei an den äußeren Umfangsflächen der Lagerkörper (12a, 12b) kegelmantelförmige Gleitflächen (16) derart ausgebildet sind, dass die verjüngten Enden der Lagerkörper (12a, 12b) zueinander weisen, und wobei an inneren Umfangsflächen des Planetenrads (13) zu den Gleitflächen (16) des Planetenradlagers (12) korrespondierende Laufflächen (20) ausgebildet sind.

2. Planetengetriebe nach Anspruch 1, **dadurch gekennzeichnet, dass** die Lagerkörper (12a, 12b) axial beabstandet angeordnet sind.

3. Planetengetriebe nach einem der vorhergehenden Ansprüche, **dadurch gekennzeichnet, dass** wenigstens ein Lagerkörper (12a, 12b) in axialer Richtung verstellbar ist, um zwischen den Gleitflächen (16) des Planetenradlagers (12) und den korrespondierenden Laufflächen (20) des gelagerten Planetenrads (13) einen Schmierspalt (25) definierter Höhe (S) einzustellen.

4. Planetengetriebe nach Anspruch 3, **dadurch gekennzeichnet, dass** genau ein Lagerkörper (12a, 12b) verstellbar ist und der andere Lagerkörper (12a, 12b) eine axialfeste Position aufweist.

5. Planetengetriebe nach Anspruch 4, **dadurch gekennzeichnet, dass** die axiale Position des axialfesten Lagerkörpers (12a, 12b) durch einen Axialanschlag (10, 29) definiert ist, insbesondere eine an der Planetenradachse (11) ausgebildete radiale Ringschulter (29) oder eine Wange (10) des Planetenträgers (9) .

6. Planetengetriebe nach einem der Ansprüche 3 bis 5, **dadurch gekennzeichnet, dass** dem verstellbaren Lagerkörper (12a, 12b) Justiermittel (26, 27, 28) zum axialen Verstellen zugeordnet sind.

7. Planetengetriebe nach Anspruch 6, **dadurch gekennzeichnet, dass** Distanzelemente (26) als Justiermittel vorgesehen sind, die zwischen einem Lagerkörper (12a, 12b) und einer benachbarten Wange (10) des Planetenträgers (9) und/oder zwischen den Lagerkörpern (12a, 12b) angeordnet sind.

8. Planetengetriebe nach einem der Ansprüche 3 bis 7, **dadurch gekennzeichnet, dass** der verstellbare Lagerkörper (12a, 12b) auf die Planetenradachse (11) aufgeschraubt ist.

9. Planetengetriebe nach einem der Ansprüche 3 bis 7, **dadurch gekennzeichnet, dass** der verstellbare Lagerkörper (12a, 12b) in die benachbarte Wange (10) des Planetenträgers (9) eingeschraubt ist.

10. Planetengetriebe nach einem der Ansprüche 8 oder 9, **dadurch gekennzeichnet, dass** eine Verdrehsicherung (28) vorgesehen ist, mittels derer der verstellbare Lagerkörper (12a, 12b) axial festlegbar ist.

11. Planetengetriebe nach einem der vorhergehenden Ansprüche, **dadurch gekennzeichnet, dass** in jeder Gleitfläche (16) wenigstens eine Schmiertasche (19) ausgebildet ist, in die ein Schmierstoffkanal (17) mündet, der den Lagerkörper (12a, 12b) radial durchsetzt, wobei der Schmierstoffkanal (17) mit einem exzentrischen Schmierstoffzuführkanal (18) verbunden ist, der in der Planetenradachse (11) ausgebildet ist und diese axial durchsetzt.

12. Planetengetriebe nach einem der vorhergehenden Ansprüche, **dadurch gekennzeichnet, dass** zwischen den Lagerkörpern (12a, 12b) ein Distanzring (21) angeordnet ist, der die Planetenradachse (11) umgreift und einen minimalen axialen Abstand zwischen den Lagerkörpern (12a, 12b) definiert.

13. Planetengetriebe nach Anspruch 12, **dadurch gekennzeichnet, dass** an einer inneren Umfangsfläche des Distanzrings (21) eine ringförmige Schmierstoffsammel-Nut (22) ausgebildet ist.

14. Planetengetriebe nach Anspruch 13, **dadurch gekennzeichnet, dass** in dem Distanzring (21) eine Mehrzahl von Schmierstoffkanälen (23) ausgebildet ist, die in die Schmierstoffsammel-Nut (22) münden.

15. Planetengetriebe nach Anspruch 14, **dadurch gekennzeichnet, dass** in der Planetenradachse (11) ein zentraler Schmierstoffzuführkanal (24) ausgebildet ist, der in die Schmierstoffsammel-Nut (22) des Distanzrings (21) mündet.

## Claims

1. Planetary gearbox (1), in particular for a wind power plant, with a gearbox housing (2), a central sun wheel (5), which is held in the gearbox housing (2) so as to be able to rotate about a central gearbox axis of rotation (Z), and supports an external toothing (6), a hollow wheel (7), which is arranged concentrically to the central gearbox axis of rotation (Z) in the gearbox housing (2) and has an internal toothing (8), a planetary carrier (9), which is mounted in the gearbox housing (2) so as to be able to rotate about the central gearbox axis of rotation (Z), and a number of planetary wheels (13), which are mounted on the planetary carrier (9) so as to be able to rotate about planetary wheel axes of rotation (A) by means of planetary wheel bearings (12) configured as slide bearings and have external toothings (14), which engage with the internal toothing (8) of the hollow wheel (7) and the external toothing (6) of the sun wheel (5), **characterised in that** each planetary wheel bearing (12) comprises two annular bearing elements (12a, 12b) which are offset by a planetary wheel axis (11) and are held in a torsion-resistant manner hereupon, wherein cone-shaped sliding surfaces (16) are embodied on the outer peripheral surfaces of the bearing elements (12a, 12b) such that the tapered ends of the bearing elements (12a, 12b) point to one another and wherein wheel treads (20) corresponding to the sliding surfaces (16) of the planetary wheel bearing (12) are embodied on the inner peripheral surfaces of the planetary wheel (13).

2. Planetary gearbox according to claim 1, **characterised in that** the bearing elements (12a, 12b) are arranged axially at a distance from one another.

3. Planetary gearbox according to one of the preceding claims, **characterized in that** at least one bearing element (12a, 12b) can be adjusted in the axial direction in order to set a lubrication gap (25) of a defined height (S) between the sliding surfaces (16) of the planetary wheel bearing (12) and the corresponding wheel treads (20) of the mounted planetary wheel (13).

4. Planetary gearbox according to claim 3, **characterised in that** precisely one bearing element (12a, 12b) can be adjusted and the other bearing element (12a, 12b) has an axially fixed position.

5. Planetary gearbox according to claim 4, **characterised in that** the axial position of the axially fixed bearing element (12a, 12b) is defined by an axial stop (10, 29), in particular a radial annular shoulder (29) or a solebar (10) of the planetary carrier (9) embodied on the planetary wheel axis (11) .

6. Planetary gearbox according to one of claims 3 to 5, **characterised in that** adjustment means (26, 27, 28) are assigned to the adjustable bearing element (12a, 12b) for axial adjustment purposes.

7. Planetary gearbox according to claim 6, **characterised in that** spacer elements (26) are provided as adjustment means, which are arranged between a bearing element (12a, 12b) and an adjacent solebar (10) of the planetary carrier (9) and/or between the bearing elements (12a, 12b).

8. Planetary gearbox according to one of claims 3 to 7, **characterised in that** the adjustable bearing element (12a, 12b) is screwed onto the planetary wheel axis (11).

9. Planetary gearbox according to one of claims 3 to 7, **characterised in that** adjustable bearing element (12a, 12b) is screwed into the adjacent solebar (10) of the planetary carrier (9).

10. Planetary gearbox according to one of claims 8 or 9, **characterised in that** a torsion-proof securing element (28) is provided, by means of which the adjustable bearing element (12a, 12b) can be axially defined.

11. Planetary gearbox according to one of the preceding claims, **characterised in that** at least one lubrication pocket (19) is embodied in each sliding surface (16), into which a lubricant duct (17) opens, which radially offsets the bearing element (12a, 12b), wherein the lubricant duct (17) is connected to an eccentric lubricant supply duct (18), which is embodied in the planetary wheel axis (11) and axially offsets the same.

12. Planetary gearbox according to one of the preceding claims, **characterised in that** a spacer ring (21) which surrounds the planetary wheel axis (11) and defines a minimal axial distance between the bearing elements (12a, 12b) is arranged between the bearing elements (12a, 12b).

13. Planetary gearbox according to claim 12, **characterised in that** an annular lubricant collecting groove (22) is embodied on an inner peripheral surface of the spacer ring (21).

14. Planetary gearbox according to claim 13, **characterised in that** a plurality of lubricant ducts (23) is embodied in the spacer ring (21), said ducts opening into the lubricant collecting groove (22).

15. Planetary gearbox according to claim 14, **characterised in that** a central lubricant supply duct (24) which opens into the lubricant collecting groove (22) of the spacer ring (21) is embodied in the planetary wheel axis (11).

## Revendications

1. Train (1) épicycloïdal, notamment pour une éolienne, comprenant un carter (2) d'engrenage, une roue (5) solaire centrale, qui est maintenue tournante autour d'un axe (Z) de rotation central d'engrenage et qui porte une denture (6) extérieure, une couronne (7), qui est montée concentriquement à l'axe (Z) de rotation central d'engrenage dans le carter (2) de l'engrenage et qui a une denture (8) intérieure, une cage (9) de transmission, qui est montée tournante autour de l'axe (Z) de rotation central de l'engrenage dans le carter (2) de l'engrenage, et plusieurs roues (13) satellites, qui sont montées tournantes au moyen de paliers (12) conformés en paliers lisses sur la cage (9) de transmission autour d'axes (A) de rotation de roue satellite et qui ont des dentures (14) extérieures, qui engrènent dans la denture (8) intérieure de la couronne (7) et dans la denture (6) extérieure de la roue (5) solaire,
**caractérisé en ce que** chaque palier (12) de roue satellite comprend deux corps (12a, 12b) de palier annulaires, qui sont traversés par un axe (11) de roue satellite et qui en sont solidaires en rotation, dans lequel ? sur les surfaces périphériques extérieures des corps (12a, 12b) de palier, sont constituées des surfaces (16) de glissement en forme de surfaces latérales coniques, de manière à ce que les extrémités rétrécies des corps (12a, 12b) de palier soient tournées l'une vers l'autre, et dans lequel, sur des surfaces périphériques intérieures de la roue (13) satellite, sont constituées des surfaces (20) de roulement correspondantes aux surfaces (16) de glissement du palier (12) de roue satellite.

2. Train épicycloïdal suivant la revendication 1, **caractérisé en ce que** les corps (12a, 12b) de palier sont disposés en étant à distance axialement.

3. Train épicycloïdal suivant l'une des revendications précédentes, **caractérisé en ce qu'**au moins un corps (12a, 12b) de palier peut être déplacé dans la direction axiale pour régler, entre les surfaces (16) de glissement du palier (12) de roue satellite et les surfaces (20) de roulement correspondantes de la roue (13) satellite montée, un intervalle (25) de lubrification de hauteur (S) définie.

4. Train épicycloïdal suivant la revendication 3, **caractérisé en ce qu'**exactement un corps (12a, 12b) de palier peut être déplacé et l'autre corps (12a, 12b) de palier a une position fixe axialement.

5. Train épicycloïdal suivant la revendication 4, **caractérisé en ce que** la position axiale du corps (12a, 12b) de palier fixe axialement est définie par une butée (10, 29) axiale, notamment par un épaulement (29) annulaire radial, constitué sur l'axe (11) de la roue satellite ou par une joue (10) de la cage (9) de transmission.

6. Train épicycloïdal suivant l'une des revendications 3 à 5, **caractérisé en ce que** des moyens (26, 27, 28) d'ajustement pour le déplacement axial sont associés au corps (12a, 12b) de palier pouvant être déplacé.

7. Train épicycloïdal suivant la revendication 6, **caractérisé en ce que** des éléments (26) de mise à distance sont prévus comme moyens d'ajustement, lesquels sont disposés entre un corps (12a, 12b) de palier et une joue (10) voisine de la cage (9) de transmission et/ou entre les corps (12a, 12b) de palier.

8. Train épicycloïdal suivant l'une des revendications 3 à 7, **caractérisé en ce que** le corps (12a, 12b) de palier pouvant être déplacé est vissé sur l'axe (11) de la roue satellite.

9. Train épicycloïdal suivant l'une des revendications 3 à 7, **caractérisé en ce que** le corps (12a, 12b) de palier pouvant être déplacé est vissé dans la joue (10) voisine de la cage (9) de transmission.

10. Train épicycloïdal suivant l'une des revendications 8 ou 9, **caractérisé en ce qu'**il est prévu un dispositif (28) d'antitorsion au moyen duquel le corps (12a, 12b) de palier pouvant être déplacé peut être fixé axialement.

11. Train épicycloïdal suivant l'une des revendications précédentes, **caractérisé en ce qu'**il est constitué dans chaque surface (16) de glissement au moins une poche (19) de lubrification, dans laquelle débouche un conduit (17) pour du lubrifiant, qui traverse radialement le corps (12a, 12b) de palier, dans lequel le conduit (17) pour du lubrifiant communique avec un conduit (18) excentré d'amenée de lubrifiant, qui est constitué dans l'axe (11) de la roue satellite et qui passe dans cet axe axialement.

12. Train épicycloïdal suivant l'une des revendications précédentes, **caractérisé en ce qu'**entre les corps (12a, 12b) de palier est disposée une bague (21) de mise à distance, qui entoure l'axe (11) de roue satellite et qui définit une distance axiale minimum entre les corps (12a, 12b) de palier.

13. Train épicycloïdal suivant la revendication 12, **caractérisé en ce qu'**une rainure (22) annulaire collectrice de lubrifiant est constituée sur une surface périphérique intérieure de la bague (21) de mise à distance.

14. Train épicycloïdal suivant la revendication 13, **caractérisé en ce que**, dans la bague (21) de mise à distance est constituée une pluralité de conduits (23) pour du lubrifiant, qui débouche dans la rainure (22) collectrice de lubrifiant.

15. Train épicycloïdal suivant la revendication 14, **caractérisé en ce que**, dans l'axe (11) de la roue satellite, est constitué un conduit (24) central d'amenée de lubrifiant, qui débouche dans la rainure (22) collectrice de lubrifiant de la bague (21) de mise à distance.
